**Europäisches Patentamt**

**European Patent Office**

**Office européen des brevets**

(11) Numéro de publication : **0 363 639 B1**

(12) **FASCICULE DE BREVET EUROPEEN**

(45) Date de publication du fascicule du brevet :
**05.08.92 Bulletin 92/32**

(21) Numéro de dépôt : **89116428.7**

(22) Date de dépôt : **06.09.89**

(51) Int. Cl.⁵ : **B60C 17/04**

(54) **Appui de sécurite à incorporer à l'intérieur d'un pneumatique.**

(30) Priorité : **15.09.88 FR 8812299**

(43) Date de publication de la demande :
**18.04.90 Bulletin 90/16**

(45) Mention de la délivrance du brevet :
**05.08.92 Bulletin 92/32**

(84) Etats contractants désignés :
**AT BE CH DE ES FR GB GR IT LI LU NL SE**

(56) Documents cités :
**DE-A- 2 909 057**
**DE-C- 956 380**
**FR-A- 2 282 346**

(73) Titulaire : **COMPAGNIE GENERALE DES ETABLISSEMENTS MICHELIN - MICHELIN & CIE**
**12, Cours Sablon**
**F-63040 Clermont-Ferrand Cédex (FR)**

(72) Inventeur : **Gouttebessis, Jacques**
**24, route d'Egaules Chanat-la-Mouteyre**
**F-63530 Volvic (FR)**
Inventeur : **Jouve, Guy**
**26, rue des Garennes**
**F-63800 Cournon-d'Aubergne (FR)**

(74) Mandataire : **Bauvir, Jacques et al**
**Michelin & Cie Service K. Brevets**
**F-63040 Clermont-Ferrand Cédex (FR)**

Jouve, 18, rue Saint-Denis, 75001 PARIS

## Description

La présente invention concerne l'utilisation des pneumatiques après crevaison ou en cas de perte de pression importante. Elle propose un appui de sécurité que l'on monte sur la jante, à l'intérieur du pneumatique, pour reprendre la charge en cas de défaillance dudit pneumatique.

Parmi les très nombreux appuis de ce genre, on peut citer la demande de brevet FR-A-2 297 738, qui montre un appui en deux parties que l'on peut monter sur une jante en une seule pièce, du type à gorge de montage, correspondant au préambule de la revendication 1. On peut citer encore la demande de brevet FR-A-2 393 689 qui montre un appui à utiliser sur une jante à rebord démontable. La diffusion de tels appuis reste extrêmement limitée car, s'ils remplissent bien leur rôle de support de la charge en relais du pneumatique lorsque celui-ci est défaillant, leur intervention provoque des instabilités dans le comportement des véhicules, donc une dégradation des performances en tenue de route.

Pour pallier cet inconvénient, la demande de brevet FR-A-2 516 868 propose un appui dont une partie se déploie pour retenir axialement la bande de roulement. Cet appui jouit de bonnes performances en tenue de route mais il est complexe et donc coûteux à produire, ce qui limite son utilisation.

La présente invention a pour objectif de réaliser un appui de sécurité à incorporer à l'intérieur d'un pneumatique, appui dont le prix de revient soit aussi bas que possible, qui remplisse la fonction de support en cas de défaillance du pneumatique, dont l'intervention soit progressive, et qui confère une tenue de route d'excellent niveau.

Selon l'invention, l'appui de sécurité destiné à être monté sur une jante, à l'intérieur d'un pneumatique, pour supporter la bande de roulement de celui-ci en cas de perte de pression de gonflage, ledit appui comportant une base en contact avec la jante pour assurer la solidarisation sur celle-ci, et un sommet sensiblement cylindrique destiné à entrer en contact avec la bande de roulement en cas de perte de pression, et laissant une garde par rapport à celle-ci à la pression nominale, ledit appui comportant en outre une liaison entre ladite base et ledit sommet, liaison permettant un mouvement relatif entre base et sommet, est caractérisé en ce que ladite liaison rejoint la base axialement du côté dudit plan destiné à être monté à l'extérieur du véhicule, par rapport à un plan perpendiculaire à l'axe de rotation, passant par le milieu du sommet, et en ce que ladite liaison rejoint le sommet axialement du côté destiné à être orienté vers l'intérieur du véhicule par rapport audit plan perpendiculaire à l'axe de rotation.

Les figures suivantes illustrent l'invention et permettent d'en bien comprendre la réalisation :

la figure 1 montre un ensemble pneumatique équipé de l'appui de sécurité selon l'invention,

la figure 2 montre un détail de l'appui de sécurité,

la figure 3 caractérise le matériau utilisé pour réaliser l'appui,

la figure 4 illustre le fonctionnement d'un ensemble pneumatique équipé de l'appui de sécurité.

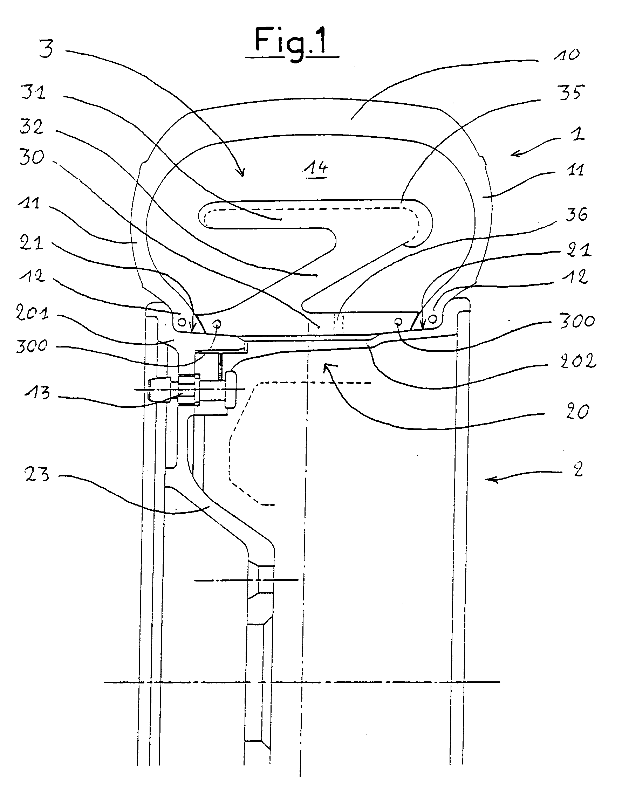

A la figure 1, on voit un pneumatique 1 tout à fait usuel, comportant une bande de roulement 10, deux flancs 11, deux bourrelets 12 assurant la liaison mécanique du pneumatique 1 avec la roue 2. Celle-ci comporte une jante 20 dont un bord 201 est amovible et dont une autre partie 202 forme une seule pièce avec le disque 23 de la roue 2. La jante 20 comporte deux sièges 21 orientés radialement à l'extérieur. L'appui 3 de sécurité a, dans cet exemple, l'allure générale d'un "Z", vu en section méridienne. Il comporte trois parties : une base 30, un sommet 31, et une liaison 32 entre base 30 et sommet 31.

Lorsqu'on sollicite un tel appui 3 dans la direction radiale, le déplacement du sommet 31 (par rapport à la base 30) dans la même direction radiale est accompagné d'un déplacement dans la direction axiale. Il en résulte nécessairement des forces d'action-réaction dans la direction axiale (c'est-à-dire parallèle à l'axe de rotation de la roue 2), au niveau du contact route-pneumatique et, in fine, au niveau de l'axe de rotation de la roue 2. Un tel appui 3 n'est pas symétrique, considéré en section méridienne. Son fonctionnement est donc différent selon le sens de montage sur la jante 20. Dans la suite de la description, "axialement intérieur" désigne le côté de l'objet considéré orienté vers l'intérieur du véhicule (en position de montage), et "axialement extérieur" le côté de l'objet considéré orienté vers l'extérieur du véhicule.

Le déposant a observé que les performances quant à la qualité du guidage du véhicule sont très différentes dans un sens de montage et dans l'autre, et que dans le sens favorable, ces performances sont bien meilleures que ce que l'on obtient avec les appuis connus. C'est pourquoi, en se référant au contact entre la bande de roulement 10 et le sommet 31, il est proposé de concevoir un appui de telle sorte que la résultante des forces exercées sur ledit sommet 31, qui en l'absence de perturbations transversales, est sensiblement radiale et centrée au milieu du sommet 31, passe axialement à l'intérieur du centre instantané de rotation du sommet 31 par rapport à la jante 20, de façon à provoquer une réaction axiale dans le sens voulu. Pour reprendre la charge en cas de défaillance du pneumatique 1, ledit sommet 31 prend nécessairement en appui sur la jante 20 de la roue 2. Dès lors, on prévoit une base 30 assurant la solidarisation avec la jante 20 et la liaison 32 rejoint donc ladite base 30 axialement du côté extérieur du véhicule, afin de décaler le centre instantané de rotation du sommet 31 dans le sens souhaité. Par "solidarisation" sur la jante, on entend une liaison telle qu'il n'y ait pas de mouvement relatif entre base 30 et jante 20. Au besoin, on renforce la base 30 par des tringles 300.

La forme en Z est très avantageuse car elle permet de déporter au maximum le point de rencontre entre la liaison 32 et la base 30. Elle permet aussi de déporter dans le sens opposé, c'est-à-dire vers l'intérieur du véhicule, le point de rencontre entre la liaison 32 et le sommet 31, ce qui a tendance à déplacer vers l'intérieur du véhicule le point d'application de la résultante des forces agissant sur le sommet 31, donc à augmenter le fléchissement de l'appui 3, à charge constante. Cela a un effet favorable sur le guidage du véhicule lors de l'intervention de l'appui 3. La forme en "Z" conduit également à une base 30 dont la largeur dans la direction axiale correspond à l'espace disponible entre les bourrelets 12 du pneumatique 1, ce qui permet à l'appui 3 de remplir également la fonction "blocage des bourrelets 12", nécessaire pour rouler à pression réduite ou nulle.

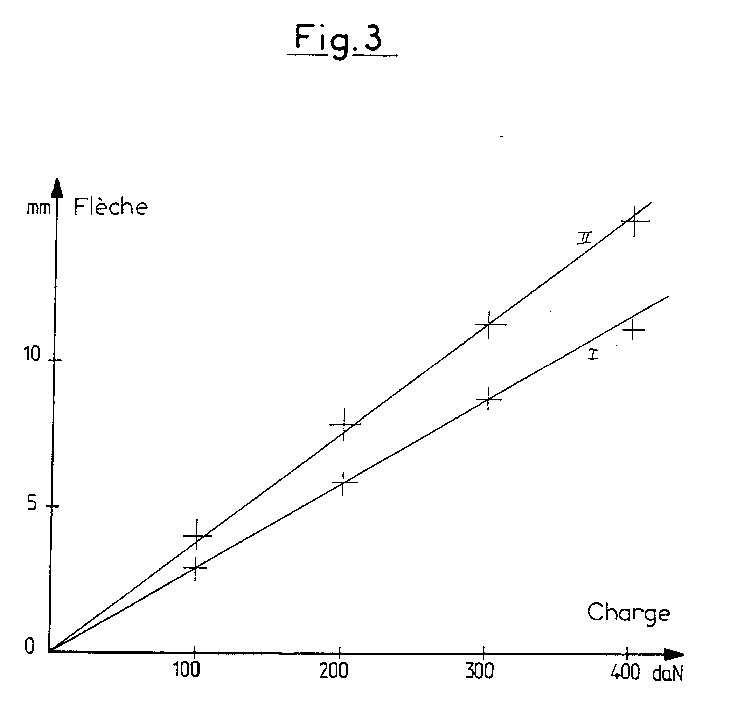

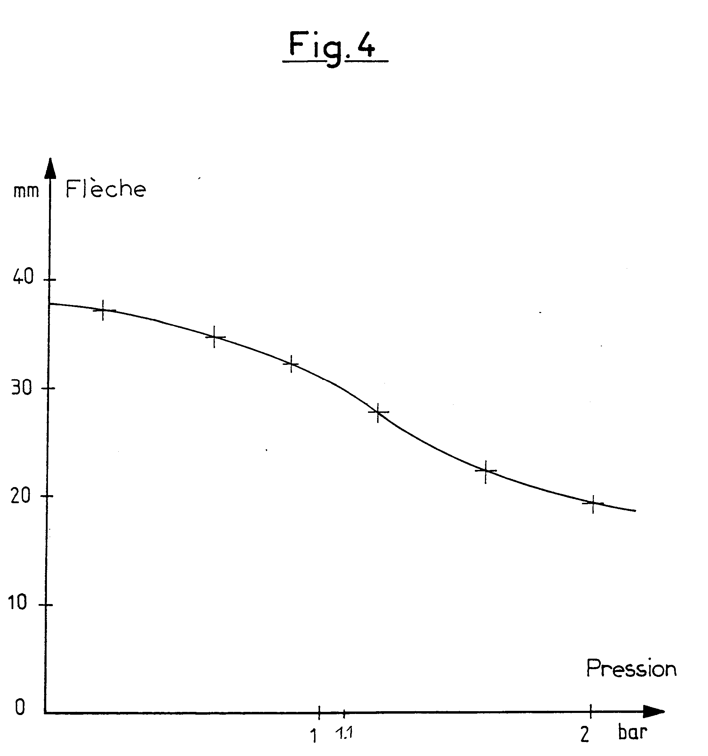

Le matériau influence bien évidemment la souplesse d'un tel appui 3, donc la progressivité de son intervention. De préférence, on choisira un polyuréthanne dont le module varie entre 55 MegaPascal (exemple I figure 3) et 40 MegaPascal (exemple II figure 3), mesuré sur éprouvette à 2 % d'extension et à 20°C. L'appui 3 illustrant l'invention a été réalisé en polyesther T.D.I. 4,4′-méthylène bis ortho chloraniline. La combinaison de la forme décrite et du choix du matériaux exposé conduit à une courbe donnant l'écrasement du pneumatique 1 pourvu de son appui de sécurité 3, en fonction de la pression de gonflage du pneumatique 1, telle que donné à la figure 4. Le pneumatique 2 est du type 165/65 SR 13 MXL. A la pression nominale, la flèche du pneumatique 1, résultant d'une charge statique de 280 décaNewton, est de 19 mm. Il subsiste alors une garde de 10 mm entre le sommet 31 et la bande de roulement 10. Cette garde disparaît pour une pression de 1,1 bar, ce qui donne le seuil d'intervention de l'appui 3. La très bonne souplesse de l'appui 3 donne une variation très progressive de la pente de la courbe pour des valeurs de pression inférieures à 1,1 bar. A la pression nulle, on observe une flèche de l'ensemble pneumatique 1 + appui 3 valant 37,75 mm, correspondant donc à un fléchissement de 8 mm de l'appui 3 lorsqu'il reprend la totalité de la charge, et à un surcroît de compression du caoutchouc de la bande de roulement 10.

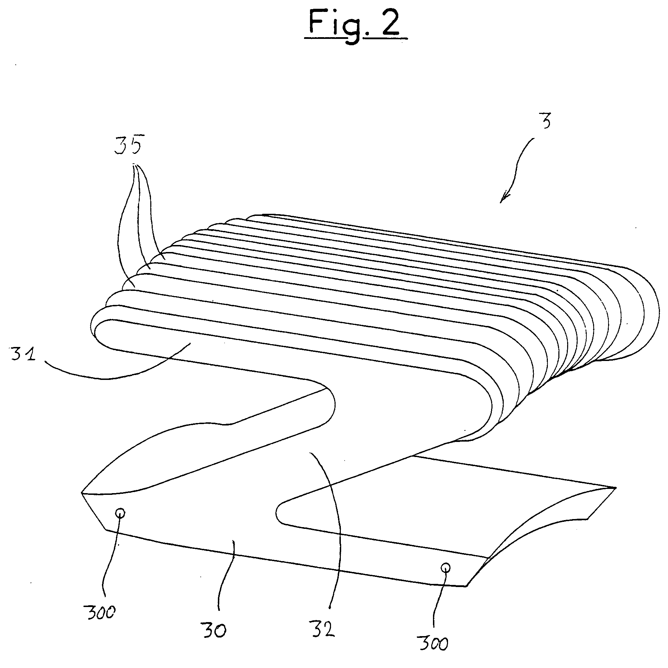

La figure 2 fait bien apparaître que la face radialement extérieure du sommet 31 comporte des nervures 35 orientées sensiblement parallèlement à l'axe de rotation du pneumatique 1. La bande de roulement est renforcée, comme cela est bien connu, par une ceinture qui impose la longueur développée dans le sens circonférentiel, laquelle est bien plus grande que la longueur développée mesurée sur le sommet 31. Le rôle des nervures 35 est d'absorber la différence de circonférence de roulement mesurée sur le sommet 31 et celle mesurée sous la bande de roulement 10 en facilitant un glissement relatif entre le mouvement de la bande de roulement 10 et le mouvement du sommet 31. Il s'agit là d'une variante intéressante, mais non obligatoire. Le frottement de glissement apparaissant entre une bande de roulement 10 et un sommet 31 lisse peut être tolérable, ou bien encore amoindri par d'autres palliatifs connus de l'homme de métier.

Il faut bien sûr percer la base 30 pour permettre à l'air de gonflage de cheminer depuis la valve 13 vers la cavité 14 pneumatique, ou bien prévoir toute disposition appropriée à cette fin. Hormis ce percement 36 et les nervures 35, l'appui 3 est un solide de révolution engendré par la rotation de la section apparaissant bien à la figure 1. Cependant, cette particularité géométrique n'est bien sûr pas limitative. La liaison 32 pourrait être assurée par un ensemble de bras individuels. La base 30 pourrait n'être que le prolongement de la liaison 32, la retenue des bourelets 12 sur leurs sièges 21 étant assurée d'une autre façon. La base 30 pourrait être conçue pour assurer le montage dans une jante en une seule pièce, avec une gorge de montage. L'appui 3 lui-même pourrait être réalisé en deux ou plusieurs pièces assemblées à l'intérieur du pneumatique au cours du montage.

Les détails d'exécution donnés dans la présente description permettent de réaliser un appui 3 en une seule pièce, facile à démouler puisqu'il n'y a pas de contre dépouille, et qui néanmoins se monte très aisément de la façon suivante : on ovalise l'appui 3 en déployant à l'intérieur de celui-ci un cric de véhicule automobile, ou un vérin d'extension spécifiquement adapté, on introduit l'appui 3 au centre du pneumatique 1 en le présentant de telle façon que le grand axe de l'ovale soit sensiblement perpendiculairement par rapport audit pneumatique, on libère l'ovalisation, puis on provoque une ovalisation dont le grand axe est parallèle au plan du pneumatique, et est situé à l'intérieur de celui-ci, puis, par une rotation relative de l'appui 3 et du pneumatique 1, on amène ledit appui 3 complètement à l'intérieur des bourrelets 12, et enfin on le laisse reprendre sa forme circulaire naturelle, puis on enfile le pneumatique 1 contenant l'appui 3 sur la jante 20.

Afin d'illustrer les performances atteintes en matière de tenue de route, on a fait rouler un véhicule dont la roue arrière à l'extérieur du virage est équipée d'un ensemble comportant l'appui 3 décrit ci-dessus et un pneumatique 165/65 SR 13 MXL à pression nulle. L'essai consistant à prendre un virage de rayon valant 40 m, sur un revêtement goudronné sec, a donné les résultats suivants :
passage à 60 km/h possible dans le sens de montage favorable et passage à 50 km/h avec un appui monté à l'envers, les passages étant effectués à la limite du dérapage du véhicule.

## Revendications

1. Appui de sécurité destiné à être monté sur une jante (20), à l'intérieur d'un pneumatique (1), pour supporter la bande de roulement (10) de celui-ci en cas de perte de pression de gonflage, ledit appui (3) comportant une base (30) en contact avec la jante (20) pour assurer la solidarisation sur celle-ci, et un sommet (31) sensiblement cylindrique destiné à entrer en contact avec la bande de roulement (10) en cas de perte de pression, et laissant une garde par rapport à celle-ci à la pression nominale, ledit appui (3) comportant en outre une liaison (32) entre ladite base (30) et ledit sommet (31), liaison (32) permettant un mouvement relatif entre base (30) et sommet (31), caractérisé en ce que ladite liaison (32) rejoint la base (30) axialement du côté destiné à être monté à l'extérieur du véhicule, par rapport à un plan perpendiculaire à l'axe de rotation, passant par le milieu du sommet (31), et en ce que ladite liaison (32) rejoint le sommet (31) axialement du côté destiné à être orienté vers l'intérieur du véhicule par rapport audit plan perpendiculaire à l'axe de rotation.

2. Appui selon la revendication 1, caractérisé en ce que la largeur de ladite base (30) dans la direction axiale correspond à l'espace disponible entre les bourrelets (12) du pneumatique (1).

3. Appui selon l'une des revendications 1 ou 2, caractérisé en ce que ladite liaison (32) rejoint la base (30) à l'extrémité axialement extérieure de ladite base (30).

4. Appui selon la revendication 3, caractérisé en ce qu'il a, en section méridienne, la forme générale d'un "Z".

5. Appui selon l'une des revendications 1 à 4, caractérisé en ce que la face radialement extérieur du sommet (31) comporte des nervures (35) orientées sensiblement parallèlement à l'axe de rotation.

## Patentansprüche

1. Sicherheitsstütze, dazu bestimmt, auf einer Felge (20) im Inneren eines Luftreifens (1) montiert zu werden, um die Lauffläche (10) desselben im Falle des Verlustes des Aufblasdruckes zu tragen, wobei die Stütze (3) eine Basis (30), die in Kontakt mit der Felge steht, um die Verbindung mit ihr zu sichern und einen Scheitel (31), der im wesentlichen zylindrisch ist und dazu bestimmt ist, mit der Lauffläche im Falle des Druckverlustes in Kontakt zu treten, umfaßt, wobei zwischen Scheitel und Lauffläche bei Nominaldruck ein Abstand freibleibt, wobei die Stütze (3) weiters eine Verbindung (32) zwischen der Basis (30) und dem Scheitel (31) aufweist und die Verbindung (32) eine Relativbewegung zwischen der Basis (30) und dem Scheitel (31) erlaubt, dadurch gekennzeichnet, daß, axial gesehen, die Verbindung (32) die Basis (30) auf der Seite einer Normalebene zur Rotationsachse, die durch die Mitte des Scheitels (31) geht, trifft, die dazu bestimmt ist, auf der Außenseite des Fahrzeuges montiert zu werden, und dadurch, daß, axial gesehen, die Verbindung (32) den Scheitel (31) auf der Seite dieser Normalebene auf die Rotationsachse trifft, die dazu bestimmt ist, zum Fahrzeuginneren gerichtet zu sein.

2. Stütze nach Anspruch 1, dadurch gekennzeichnet, daß die Breite der Basis (30) in axialer Richtung dem zwischen den Wülsten (12) des Luftreifens (1) verfügbaren Abstand entspricht.

3. Stütze nach einem der Ansprüche 1 oder 2, dadurch gekennzeichnet, daß die Verbindung (32) die Basis (30) am axial äußeren Ende der Basis (30) trifft.

4. Stütze nach Anspruch 3, dadurch gekennzeichnet, daß ihr Meridianschnitt eine allgemeine "Z"-Form hat.

5. Stütze nach einem der Ansprüche 1 bis 4, dadurch gekennzeichnet, daß die radial äußere Seite des Scheitels (31) Rillen (35) aufweist, die im wesentlichen parallel zur Rotationsachse verlaufen.

## Claims

1. Safety support intended to be mounted on a rim (20), inside a tire (1), to support tread (10) of it in case of loss of inflation pressure, said support (3) comprising a base (30) in contact with rim (20) to provide the bonding on it, and an approximately cylindrical top (31) intended to come in contact with tread (10) in case of loss of pressure, and leaving a clearance in relation to it at nominal pressure, said support (3) further comprising a connection (32) between said base (30) and said top (31), connection (32) making possible a relative movement between base (30) and top (31), characterized in that said connection (32) joins base (30) axially on the side intended to be mounted on the outside of the vehicle, in relation to a plane perpendicular to the axis of rotation, passing through the middle of top (31), and in that said connection (32) joins top (31) axially on the side intended to be oriented toward the inside of the vehicle in relation to said plane perpendicular to the axis of rotation.

2. Support according to claim 1, wherein the width of said base (30) in the axial direction corresponds to the available space between beads (12) of tire (1).

3. Support according to claims 1 or 2, wherein said connection (32) joins base (30) at the axially outside end of said base (30).

4. Support according to claim 3, wherein it has, in meridian section, the general shape of a "Z."

5. Support according to claims 1 to 4, wherein the radially outside face of top (31) comprises ribs (35) oriented approximately parallel to the axis of rotation.

# Fig.1

# Fig. 2

# Fig.3

# Fig.4